# EUROPEAN PATENT APPLICATION

(11) **EP 4 793 786 A1**
(43) Date of publication of application: **19.08.2026**
(21) Application number: 24877603.1
(22) Date of filing: 10.10.2024
(51) Int. Cl.: G06F 15/78, G06F 30/394, G06F 30/33, G06F 13/38, G06N 3/063, G06F 115/02, G06F 115/08

(54) **COMMUNICATION METHOD PERFORMED IN NETWORK-ON-CHIP**

(30) Priority: 13.10.2023 KR 20230137011; 08.10.2024 KR 20240136165
(71) Applicant: Electronics and Telecommunications Research Institute, Daejeon 34129 (KR)
(72) Inventor: HAN, Kyuseung, Daejeon 34129 (KR); KIM, Hyuk, Daejeon 34129 (KR); BYUN, Kyung Jin, Daejeon 34129 (KR); LEE, Sukho, Daejeon 34129 (KR); LEE, Jae-Jin, Daejeon 34129 (KR)
(74) Representative: Betten & Resch
(86) International application number: PCT/KR2024/096245
(87) International publication number: WO 2025/080068

(57) **Abstract**

Provided is a communication method by which a transmitting device and a receiving device communicate through a request channel and a reply channel, the communication method including: outputting, by the transmitting device, a burden signal including data to the receiving device through the request channel; storing, by the receiving device, the data; providing, by the transmitting signal, a reply request signal indicating whether a reply is required; and performing, by the receiving device, a reply to the stored data through the reply channel according to the reply request signal.

## Description

### [Technical Field]

The present disclosure generally relates to a communication method performed on a network-on-chip (NoC).

### [Background]

A system semiconductor (system-on-chip: SoC) is composed of hardware (HW) components responsible for each function, which are referred to as HW intellectual properties (IPs). Central processing units (CPUs) and HW accelerators are also types of IPs. Since these IPs need to communicate with each other, the TPs need to be designed with interfaces that have the same or compatible protocols, and hardware that connects the interfaces to enable communication between IPs within a system semiconductor is referred to as a system interconnect.

As the system interconnects increasingly require higher performance and various functions, the system interconnects have been developed in various forms, with a network-on-chip (NoC) form being widely used recently. Currently, the NoC is the most commonly used system interconnect architecture among SoCs, and it was developed to support a variety of protocols and high performance compared to the system buses.

### [Summary of the Invention]

### [Technical Problem]

In order to rapidly respond to technological changes and meet time-to-market demands, it is required to utilize a modular accelerator architecture. However, delays caused by unnecessary handshaking and state transitions leads to reduced communication efficiency, which becomes an obstacle in meeting the performance requirements of system semiconductors. The embodiments are intended to resolve these issues of the related art.

### [Technical Solution]

According to an embodiment of the present invention, there is provided a communication method by which a transmitting device and a receiving device communicate through a request channel and a reply channel, which includes: outputting, by the transmitting device, a burden signal including data to the receiving device through the request channel; storing, by the receiving device, the data; providing, by the transmitting signal, a reply request signal indicating whether a reply is required; and performing, by the receiving device, a reply to the stored data through the reply channel according to the reply request signal.

According to an aspect, the outputting of the burden signal further may include: performing handshaking such that the transmitting device further outputs a channel valid signal through the request channel and the receiving device outputs a ready signal indicating reception of a provided command and data through the request channel.

According to an aspect, the reply request signal may have a first value for requesting a reply from a counterpart that has received the reply request signal and a second value for not requesting a reply from the counterpart that has received the reply request signal, and the receiving device, upon receiving the reply request signal having the first value, may perform a reply to the stored data through the reply channel.

According to an aspect, the reply request signal may have a first value for requesting a reply from a counterpart that has received the reply request signal and a second value for not requesting a reply from the counterpart that has received the reply request signal, and the receiving device, upon receiving the reply request signal having the second value, may not perform a reply to the stored data through the reply channel.

According to another embodiment of the present invention, there is provided a communication method by which a transmitting device and a receiving device communicate through a request channel and a reply channel, which includes: providing, by the transmitting device, a parcel signal including data and a command regarding the data through a request channel; providing, by the transmitting device, a reply request signal indicating whether a reply is required; and performing, by the receiving device and the transmitting device, no handshaking according to the reply request signal.

According to an aspect, the reply request signal may have a first value for requesting a reply from a receiver of the reply request signal and a second value for not requesting a reply from a receiver of the reply request signal, and when the transmitting device provides the reply request signal having the second value, the receiving device and the transmitting device may perform no handshaking.

According to an aspect, the parcel signal may include data and a command transmitted from the transmitting device to the receiving device through the request channel.

According to an aspect, the parcel signal may further include an address of the data.

According to an aspect, the parcel signal may further include a reception parcel signal, and the reception parcel signal may include data transmitted from the receiving device to the transmitting device through the reply channel.

According to an aspect, the providing of the parcel signal may be performed n times; the providing of the reply request signals indicating that a reply is not required may be sequentially performed n-1 times; the transmitting device may provide the reply request signal indicating that a reply is required in the providing of an nth parcel signal; and acknowledgement between the transmitting device and the receiving device on the providing of a last parcel signal may be performed, wherein n is a natural number greater than or equal to 2, and k is a natural number less than n.

According to an aspect, the providing of the parcel signal may be performed n times; the providing of the reply request signals indicating that a reply is not required may be performed a plurality of times; and the transmitting device may perform the providing of the reply request signal indicating that a reply is required every k times out of the n times such that an acknowledgement between the transmitting device and the receiving device is performed, wherein n is a natural number greater than or equal to 2, and k is a natural number less than n.

According to another embodiment of the present invention, there is provided a communication method by which a transmitting device and a receiving device communicate through a request channel and a reply channel, which includes: providing, by the transmitting device, a first parcel signal including a command regarding first data through a request channel; providing, by the transmitting device, a second parcel signal including a command regarding second data through the request channel; outputting, by the transmitting device, a ready signal; outputting the first data without state transition of the receiving device and the transmitting device, and outputting, by the receiving device, the second data.

According to an aspect, the first parcel signal may include a read command for the first data and an address of the first data, and the second parcel signal may include a read command for the second data and an address of the second data.

According to an aspect, the ready signal may have two bits, and each bit may correspond to whether one of the first data and the second data is received.

According to an aspect, the providing of the first parcel signal and the providing of the second parcel signal further may include performing handshaking such that the transmitting device outputs a valid signal indicating that the request channel is valid and the receiving device outputs a ready signal to the request channel.

### [Effect of the Invention]

According to the embodiment, communication efficiency can be improved by reducing unnecessary traffic and state transitions.

### [Brief explanation of the drawing]

FIGS. 1 to 3 are flowcharts illustrating an outline of a communication method according to the present embodiment.
FIG. 4 is a schematic diagram illustrating a network-on-chip.
FIGS. 5 to 10 are diagrams for describing first to sixth embodiments of the communication method.

### [Detailed Description of the Invention]

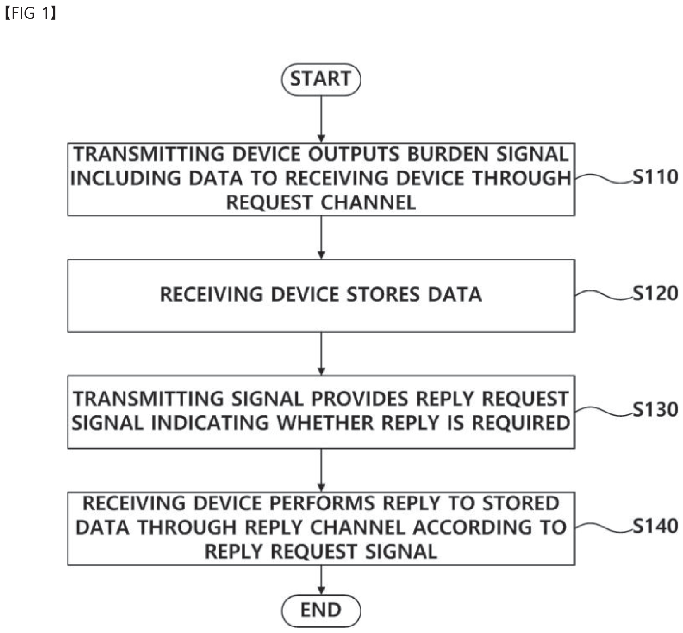

Hereinafter, the present embodiment will be described with reference to the accompanying drawings. FIGS. 1 to 3 are flowcharts illustrating an outline of a communication method according to the present embodiment. Referring to FIG. 1 , the communication method according to the embodiment is a communication method by which a transmitting device and a receiving device communicate through a request channel and a reply channel, and includes: outputting, by the transmitting device, a burden signal including data to the receiving device through the request channel (S110); storing, by the receiving device, the data (S120); providing, by the transmitting signal, a reply request signal indicating whether a reply is required (S130); and performing, by the receiving device, a reply to the stored data through the reply channel according to the reply request signal (S140).

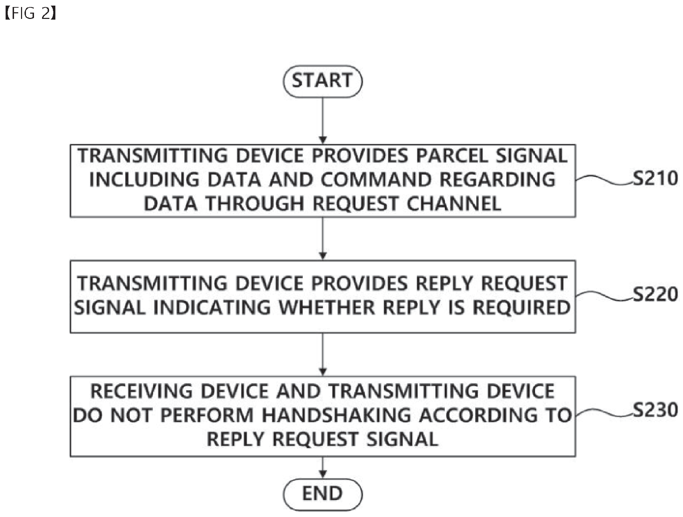

A communication method according to an embodiment illustrated in FIG. 2 is a communication method by which a transmitting device and a receiving device communicate through a request channel and a reply channel, and includes: providing, by the transmitting device, a parcel signal including data and a command regarding the data through a request channel (S210); providing, by the transmitting device, a reply request signal indicating whether a reply is required (S220); and performing, by the receiving device and the transmitting device, no handshaking according to the reply request signal.

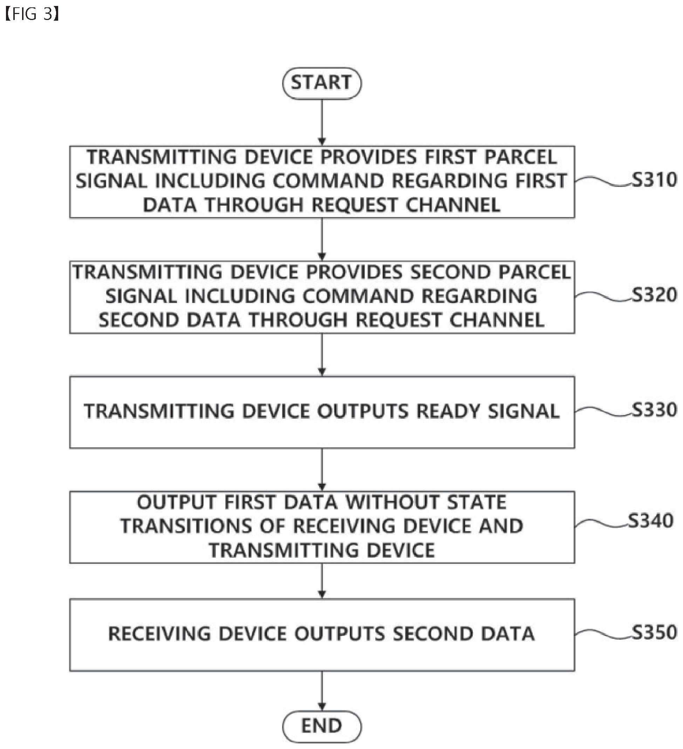

A communication method according to an embodiment illustrated in FIG. 3 is a communication method by which a transmitting device and a receiving device communicate through a request channel and a reply channel, and includes: providing, by the transmitting device, a first parcel signal including a command regarding first data through a request channel (S310); providing, by the transmitting device, a second parcel signal including a command regarding second data through the request channel (S320); outputting, by the transmitting device, a ready signal (S330); outputting the first data without state transitions of the receiving device and the transmitting device (S340); and outputting, by the receiving device, the second data (S350).

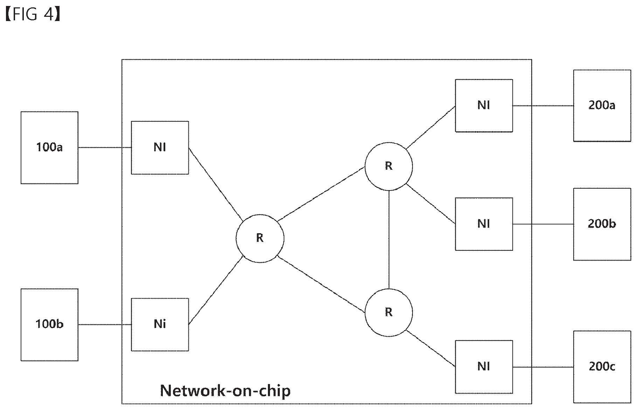

FIG. 4 is a schematic diagram illustrating the structure of a network-on-chip (NoC) in which the communication method of the present embodiment may be performed. Referring to FIG. 4 , the NoC performs data transmission and reception between first devices 100 a and 100 b and second devices 200 a, 200 b, and 200 c, which are intellectual properties (IPs) that perform communication. In one embodiment, the NoC may include a network interface (NI) module that is directly connected to the IP and converts a protocol used in the IP into a protocol suitable for internal communication in the NoC or reconverts the internal protocol to be used by the IP. In addition, the NoC may include a router module R that searches for a destination for transmission and reception and forwards data and resolves a collision when multiple communications overlap.

The communication method of the present embodiment is performed through a request channel Q and a reply channel Y The request channel Q and the reply channel Y are independent channels, and devices that perform the communication method transmit and receive signals through the request channel and the reply channel. Hereinafter, devices performing the communication method through a request channel Q and a reply channel Y are referred to as the first device and the second device.

In one embodiment, the request channel Q includes an address bus for transmitting an address and a data bus for transmitting data. The reply channel Y includes a data bus for transmitting data. In addition, commands such as write and read are transmitted together when transmitting data through the request channel Q.

The commands correspond to tasks to be performed by a device receiving the commands, and since the communication method according to the present embodiment supports numerous types of communication between the first device and the second device, in addition to read and write, commands that are defined between the first device and the second device but are not listed may be transmitted.

Signals transmitted through the request channel Q are as follows: A parcel signal QPARCEL is a multi-bit signal that is actually communicated data. For example, the parcel signal QPARCEL may include one or more of a command to be executed, data to be transmitted, and an address of data.

In one embodiment, when the first device desires to write data to the second device through the request channel Q, the first device may transmit a write command write, data to be written DATA, and the address of the data ADDRESS of DATA as a parcel signal QPARCEL. In another embodiment, when the first device desires to read data written to a certain address of the second device through the request channel Q, the first device may transmit a read command read and the address of the data ADDRESS of DATA as a parcel signal QPARCEL.

In the above-described embodiments, only the cases of read and write have been described as examples. However, other commands or commands and data that are not illustrated may be transmitted as a parcel signal QPARCEL. For example, a first device may transmit a transmit command transmit that causes a second device to transmit data to a third device, and the data to be transmitted and/or the address of the data may be transmitted as a parcel signal QPARCEL.

A QVALID signal indicates that data on the request channel Q is valid. For example, the QVALID signal may be a 1-bit signal. A QREADY signal indicates readiness to receive data on the request channel Q. For example, the QREADY signal may be a 1-bit signal.

A QHINT signal is a signal that indicates that data on the request channel will be valid. In one embodiment, when the second device is currently performing a data fetch from the memory of the second device, and the first device transmits a QHINT signal to the second device through the request channel, the second device that has received the QHINT signal through the request channel may complete the data fetch that is currently being performed and then prepare to perform the request of the first device. However, the second device may process the request of the first device after a QVALID signal is generated. Furthermore, the first device may also generate a QVALID signal directly without generating a QHINT signal.

A reply request signal QAFY is a 1-bit signal that indicates whether a reply is required for a request transmitted through the request channel. In one embodiment, when a request is transmitted with a reply request signal QAFY set to 0, the receiving side may not reply to the request. However, when a request is transmitted with a reply request signal QAFY set to 1, the receiving side needs to reply after performing the request. Therefore, when a reply is not absolutely required, the communication traffic may be reduced by transmitting the request with the reply request signal QAFY set to 0.

A burden signal QBURDEN is a multi-bit that contains data that needs to be returned without change from the reply channel Y when the reply request signal QAFY is 1. The first device and/or the second device communicating with each other may include a plurality of modules that generate a transaction involving data transmission, and may need to store information about a module that receives data that is returned after being transmitted through a transaction. In this case, a storage such as a first-in first-out (FIFO) storage that stores internal information is required, and in response to data being transmitted by a transaction, the data is stored and in response to the data being received, the data is deleted. However, according to the method, when a large amount of data has been transmitted but not received, the FIFO may not be deleted, and subsequent transactions may not be further transmitted.

In this case, by including the information that needs to be stored in the FIFO in the burden signal and transmitting the burden signal, the internal storage may be eliminated and a great number of transactions may be transmitted at the same time. Such a burden signal is suitable for communication between modules that exchange data frequently.

Signals transmitted through the reply channel Y are as follows: A parcel signal YPARCEL is a multi-bit signal that is actually transmitted data. In one embodiment, when the first device desires to read data stored in the second device through the request channel Q, the second device may transmit read data DATA as a parcel signal YPARCEL.

In another embodiment, when the first device desires to read data written to a certain address of the second device through the request channel Q, the first device may transmit a read command read and the address of the data ADDRESS of DATA as a parcel signal YPARCEL.

In the above-described embodiments, only the cases of read and write have been described as examples. However, other commands or commands and data that are not illustrated may be transmitted as a parcel signal YPARCEL. For example, a first device may transmit a transmit command transmit that causes a second device to transmit data to a third device, and the data to be transmitted and/or the address of the data may be transmitted as a parcel signal YPARCEL.

A YVALID signal is a 1-bit signal that indicates that data on the reply channel is valid. A ready signal YDREADY is a 2-bit signal that indicates readiness to receive data on the reply channel, with the lower bit indicating readiness to receive one piece of data, while both the upper bit and the lower bit being set to 1 indicates readiness to receive two pieces of data.

A YHINT signal is a 1-bit signal that, similar to the QHINT signal, indicates that data on the reply channel will soon be valid. In one embodiment, when the first device is currently performing signal processing at the processing unit of the first device, the second device transmits a YHINT signal to the second device through the reply channel. The first device that has received the YHINT signal through the reply channel may complete the signal processing that is currently being performed and then prepare to perform the request of the second device. However, the first device may process the request of the second device after a YVALID signal is generated. Furthermore, the second device may also generate the YVALID signal directly without generating the YHINT signal.

A YLAST signal is a 1-bit signal that indicates the last one of multiple replies that may occur for one request. A YBURDEN signal is transmitted data that has been transmitted as a burden signal QBURDEN by a device that has transmitted the burden signal QBURDEN, and is data that needs to be returned unchanged. A parcel signal YPARCEL is a multi-bit signal that is the result of performing the request content.

Examples of communication methods will be described below with reference to the following embodiments.

### First Embodiment

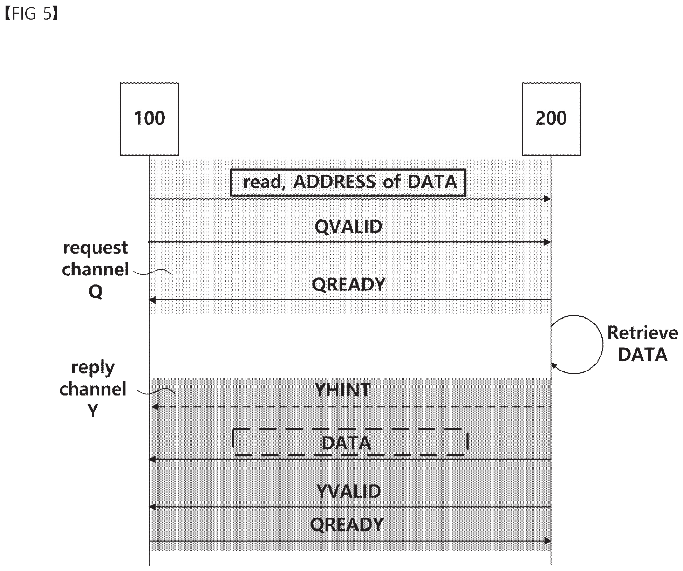

An embodiment in which a first device 100 reads data stored in a second device 200 will now described with reference to FIG. 5 . In FIG. 5 , operations performed on a request channel Q and operations performed on a reply channel Y are illustrated with different background shades. In one embodiment, the first device 100 may operate as a master and the second device 200 may operate as a slave. Also, the first device may be a processor and the second device 200 may be a memory. However, this is merely an example, and the illustrated embodiment of the communication method may be performed without limitation between a device requesting data and a device storing data.

The first device 100 transmits a command and a data address to the second device 200 as a parcel signal QPARCEL. In the illustrated embodiment, the parcel signal QPARCEL is indicated by a solid box. The address of the data ADDRESS of DATA in which the data to be read is stored and the read command are loaded onto the address bus of the request channel Q.

In addition, the first device 100 outputs a QVALID signal indicating that the address data loaded onto the request channel Q is valid to the second device 200 through the request channel Q. The second device 200, which has received the QVALID signal and the address of the data, outputs a QREADY signal through the request channel Q to acknowledge the receipt of the data request and the address. As illustrated above, the first device 100 and the second device 200 perform handshaking with each other through the QVALID signal and the QREADY signal of the Q channel.

The second device 200 acquires the data Retrieve DATA of the corresponding address using the provided address of the data ADDRESS of DATA. The second device 200 loads the acquired data onto a data channel of the reply channel Y and provides a YVALID signal to indicate that the data of the reply channel Y is valid. The first device 100 may receive the desired data from the reply channel Y.

The second device 200 may access the address of the data ADDRESS of DATA provided by the first device 100 on the address bus of the request channel Q and immediately load the data onto the reply channel Y.

In one embodiment, when the second device 200 completes accessing the data and transmitting the data, the second device 200 may output a YHINT signal, which announces that the data of the reply channel Y will soon become valid. As described above, the first device 100 that has received the YHINT signal through the reply channel may complete the task being currently performed and receive the data provided by the second device 200. However, the first device may process the data after a YVALID signal is generated.

The second device 200 transmits the data acquired from the provided address to the data channel of the reply channel Y as a parcel signal YPARCEL. In the illustrated example, the parcel signal YPARCEL is illustrated as a dashed box. The second device 200 outputs a YVALID signal indicating that the data of the reply channel Y is valid. The first device 100 may provide a QREADY signal to the reply channel Y to acknowledge the receipt of the parcel signal YPARCEL.

### Second Embodiment

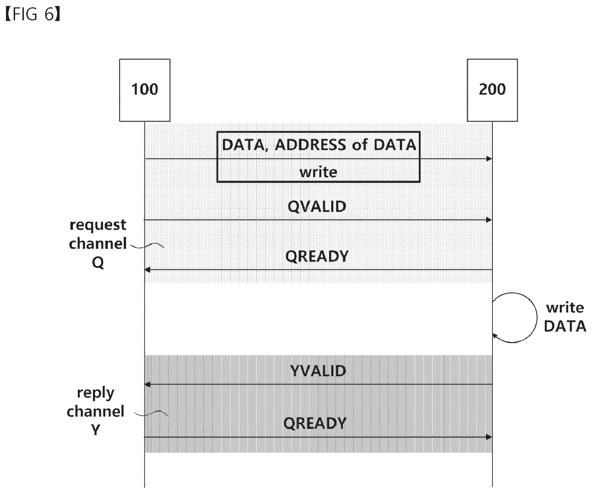

A second embodiment of data communication between a first device 100 and a second device 200 will now be described with reference to FIG. 6 . The first device 100 provides a parcel signal QPARCEL to a request channel Q to provide the second device 200 with data to be written to the second device 200, the address ADDRESS of DATA to be written in the second device, and a write command. The parcel signal QPARCEL is illustrated as a solid box.

The first device 100 outputs a QVALID signal indicating that the parcel signal QPARCEL loaded to the request channel Q is valid to the second device 200. The second device 200, which has received the parcel signal QPARCEL and the QVALID signal, outputs a QREADY signal through the request channel Q to acknowledge receipt of the data request and the address, thereby performing handshaking.

The second device 200 records the provided data DATA at the provided address of the data ADDRESS of DATA, and when the writing is complete, outputs a YVALID signal indicating the completion. The first device outputs a QREADY signal in response to the YVALID signal.

### Third Embodiment

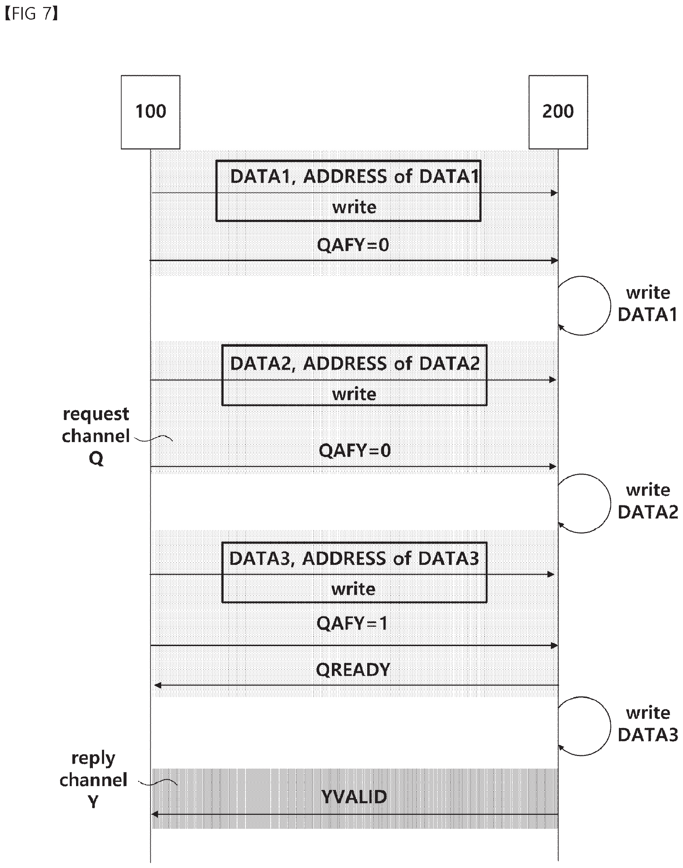

A third embodiment of data communication between a first device 100 and a second device 200 will now be described with reference to FIG. 7 . In the illustrated embodiment, a parcel signal QPARCEL is illustrated as a solid box. The first device 100 loads a write command write, the address of first data ADDRESS of DATA1 to be written in the second device 200, and the first data DATA1 to a request channel Q as a parcel signal QPARCEL. The first device 100 may provide a QVALID signal to indicate that the data provided as the parcel signal QPARCEL on the request channel Q is valid. In addition, the first device 100 transmits the signal with a reply request signal QAFY set to 0 to transmit, to the second device 200, that no reply is required through the reply channel. Therefore, handshaking may not be performed.

Since the first device 100 transmits the reply request signal QAFY as a value of 0, the second device 200 does not need to reply to the request even after the writing of the first data DATA1 is completed. In addition, the first device 100 may provide a subsequent request without waiting for a QREADY signal provided by the second device 200.

The first device 100 loads a writing command write, the address of second data ADDRESS of DATA2 to be written in the second device 200, and the second data DATA2 to the request channel Q as a parcel signal QPARCEL. In addition, the first device 100 transmits the signal with the reply request signal (QAFY) set to a value of 0 to transmit, to the second device 200, that no reply is required through the reply channel.

The second device 200 receives the second data DATA2 loaded on the data bus and writes the second data DATA2 at the address ADDRESS of DATA2 loaded on the address bus of the request channel Q. Since the first device 100 has transmitted the reply request signal QAFY as 0, the second device 200 does not need to reply to the request even after the writing of the second data DATA2 is completed.

Next, the first device 100 loads a write command write, the address of third data ADDRESS of DATA3 to be written in the second device 200, and the third data DATA3 to the request channel Q as a parcel signal QPARCEL. However, since the reply request signal QAFY has been transmitted with a value of 1, the second device 200 provides a QREADY signal through the request channel Q to acknowledge the receipt of the third data.

The second device receives the third data DATA3 loaded on the data bus and writes the third data DATA3 at the address ADDRESS of DATA3 loaded on the address bus of the request channel Q. After completing the writing, the second device 200 may provide a YVALID signal to the first device 100 through the reply channel.

When a plurality of transactions involving transmission and reception of data occur between the first device and the second device as in the present embodiment, providing a reply through the reply channel for each transaction may lead to an increase in traffic, a decrease in communication speed, and an increase in power consumption.

However, as in the present embodiment, the reply request signal QAFY may be used such that, even when a plurality of transactions involving data transmission occur, transmission is performed with the reply request signals QAFY set to a value of 0, and the reply request signal QAFY is transmitted with a value of 1 to receive a reply only for the last transaction, thereby reducing traffic while performing the same function and preventing a decrease in communication speed and an increase in power consumption.

However, this is only one embodiment. The reply request signal QAFY may be transmitted with a value of 1 for the last transaction among a plurality of transactions as illustrated above, and as an example that is not illustrated, the reply request signal QAFY may be transmitted with a value of 1 after every k transactions, or the reply request signal QAFY may be transmitted with a value of 1 for every 1/j of the total transactions, such as ½ or ⅓ of the plurality of transactions, to check the status (j, k: natural numbers).

### Fourth Embodiment

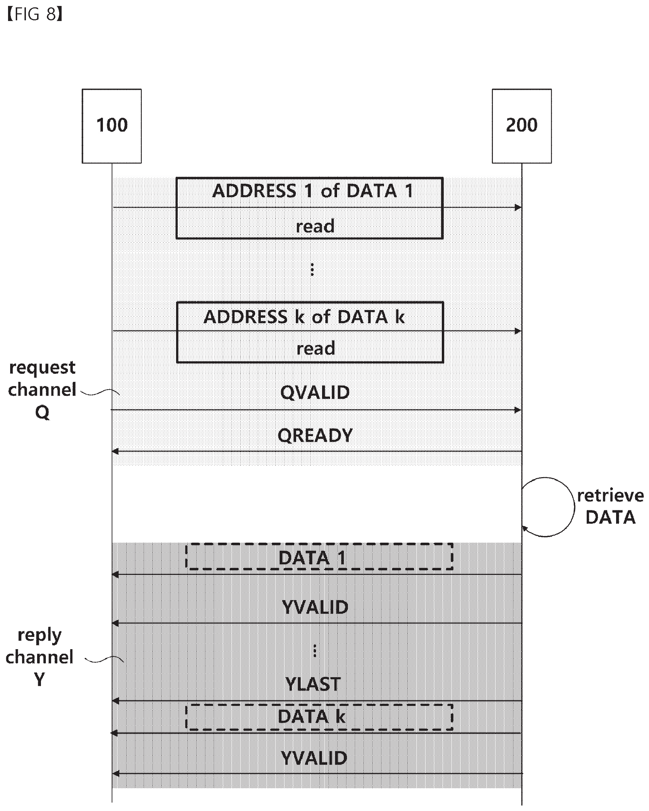

A fourth embodiment of data communication between a first device 100 and a second device 200 will now be described with reference to FIG. 8 . In the illustrated embodiment, a parcel signal QPARCEL is illustrated as a solid box, and a parcel signal YPARCEL is illustrated as a dashed box. The first device 100 provides the second device 200 with each of a plurality of data addresses ADDRESS 1 of DATA 1, . . . , and ADDRESS k of DATA k in which data to be read from the second device 200 is stored as each parcel signal QPARCEL.

The first device 100 outputs a QVALID signal indicating that the address data loaded on the request channel Q is valid to the second device 200. The second device 200 that has received the parcel signal QPARCEL and the QVALID signal outputs a QREADY signal through the request channel Q to acknowledge receipt of the data request and the address.

The second device 200 acquires the data Retrieve DATA of the corresponding address using the provided address of the data ADDRESS of DATA. The second device 200 loads the acquired data DATA to a data channel of the reply channel Y as a parcel signal YPARCEL and provides a YVALID signal to indicate that the data DATA1 of the reply channel Y is valid. As described above, the first device 100 may receive the desired data DATA1, . . . , and DATAk from the reply channel Y.

The second device 200 may load all data sets requested by the first device 100 to the reply channel Y and then output a YLAST signal to indicate that the data set is the last data set.

### Fifth Embodiment

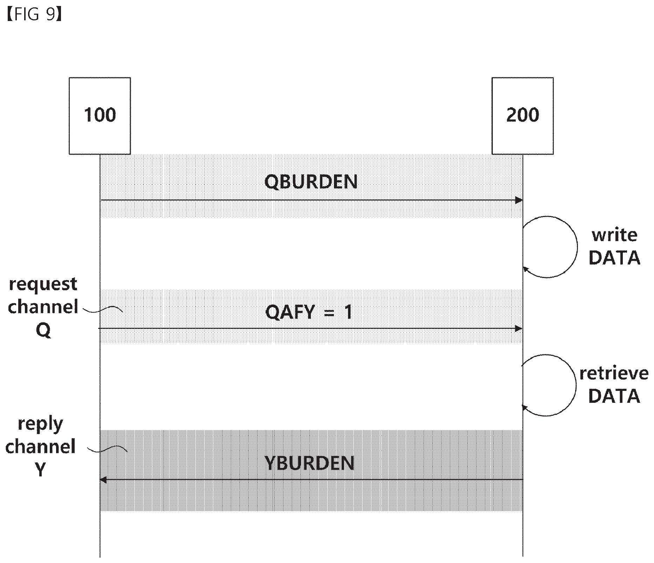

A fifth embodiment of data communication between a first device 100 and a second device 200 will now be described with reference to FIG. 9 . The first device 100 transmits a burden signal QBURDEN, which is a multi-bit signal, to the second device 200 as a parcel signal QPARCEL. The burden signal QBURDEN includes data that may be stored in a storage space, such as a FIFO, included in the first device 100, and in order to prevent a transaction from being delayed or not performable due to a storage space limitation, the data is loaded onto the burden signal QBURDEN and transmitted to the second device 200.

The burden signal QBURDEN is provided to the second device 200 and stored in the second device. In one embodiment, the second device 200 that has received the burden signal QBURDEN stores the signal provided as the burden signal QBURDEN in an internal storage device when the reply request signal QAFY is 0.

Simultaneously with or after the provision of the burden signal QBURDEN, the second device 200 may, in response to the reply request signal QAFY being 1, as in the illustrated embodiment, load multi-bit data carried in the burden signal QBURDEN onto a YBURDEN signal and transmit the YBURDEN signal back to the first device 100 through the reply channel Y As described above, data may be transmitted without limitations of the storage space within the first device 100 and the second device 200, so that a large number of transactions may be transmitted and received simultaneously. By using the burden signals QBURDEN and YBURDEN, highly efficient communication may be performed between locally adjacent devices.

### Sixth Embodiment

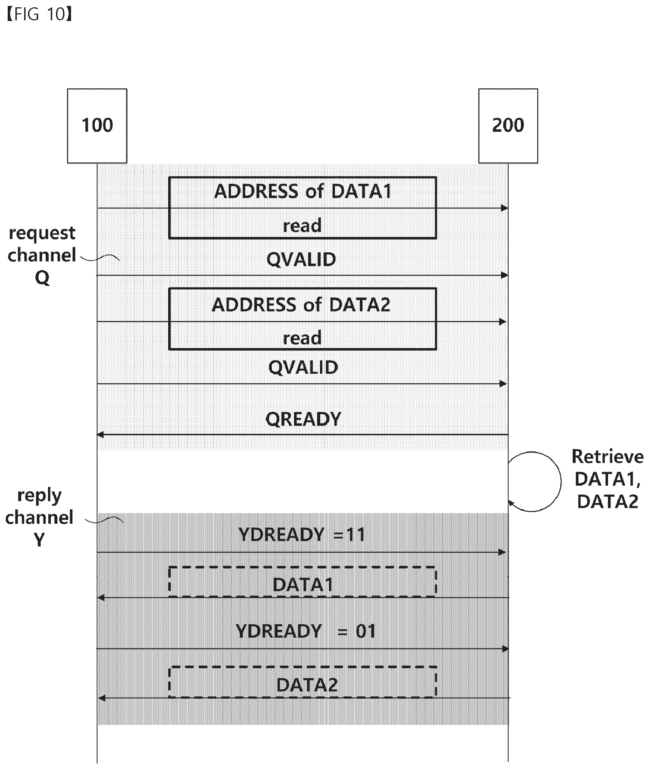

A sixth embodiment of data communication between a first device 100 and a second device 200 will now be described with reference to FIG. 10 . In the illustrated embodiment, a parcel signal QPARCEL is illustrated as a solid box, and a parcel signal YPARCEL is illustrated as a dashed box. The first device 100, in order to read first data stored in the second device 200, loads an address of the first data to a request channel Q and transmits a QVALID signal, and in order to read second data stored in the second device 200, loads an address of the second data onto the request channel Q and transmits a QVALID signal. The second device 200 transmits a QREADY signal to acknowledge the receipt.

The first device 100 outputs "11" as a ready signal YDREADY to indicate, to the second device 200, readiness to receive both the first data and the second data. The second device 200 acquires the first data DATA 1 from the provided address of the first data and loads the first data onto the data bus of the reply channel Y.

Subsequently, the first device 100 outputs "01" as a YDREADY signal to indicate, to the second device 200, that the first device 100 has completed receiving the first data and is ready to receive the second data DATA2. The second device 200 acquires the second data DATA 2 from the provided address of the second data and loads the second data onto the data bus of the reply channel Y to transmit the data. Therefore, data may be transmitted and received without a state transition.

According to the conventional technology, some protocols require two state transitions based on the ready signal and the valid signal to receive two pieces of data, which causes unnecessary state transitions, leading to increased traffic and increased power consumption.

However, according to the present embodiment, the first data and the second data may be transmitted and received with the ready signal without state transitions, thereby eliminating unnecessary state transitions and also reducing traffic.
While the present invention has been described with reference to embodiments shown in the drawings to aid in the understanding of the present invention, this is merely illustrative, and it will be appreciated by those skilled in the art that various modifications and other equivalent embodiments are possible. Therefore, the true technical scope of protection of the present invention should be defined by the following claims.

## Claims

1. A communication method by which a transmitting device and a receiving device communicate through a request channel and a reply channel, the communication method comprising:
outputting, by the transmitting device, a burden signal including data to the receiving device through the request channel;
storing, by the receiving device, the data;
providing, by the transmitting signal, a reply request signal indicating whether a reply is required; and
performing, by the receiving device, a reply to the stored data through the reply channel according to the reply request signal.

2. The method of claim 1, wherein the outputting of the burden signal further includes performing handshaking such that the transmitting device further outputs a channel valid signal through the request channel and the receiving device outputs a ready signal indicating reception of a provided command and data through the request channel.

3. The method of claim 1, wherein:
the reply request signal has a first value for requesting a reply from a counterpart that has received the reply request signal and a second value for not requesting a reply from the counterpart that has received the reply request signal; and
the receiving device, upon receiving the reply request signal having the first value, performs a reply to the stored data through the reply channel.

4. The method of claim 1, wherein:
the reply request signal has a first value for requesting a reply from a counterpart that has received the reply request signal and a second value for not requesting a reply from the counterpart that has received the reply request signal; and
the receiving device, upon receiving the reply request signal having the second value, does not perform a reply to the stored data through the reply channel.

5. A communication method by which a transmitting device and a receiving device communicate through a request channel and a reply channel, the communication method comprising:
providing, by the transmitting device, a parcel signal including data and a command regarding the data through a request channel;
providing, by the transmitting device, a reply request signal indicating whether a reply is required; and
performing, by the receiving device and the transmitting device, no handshaking according to the reply request signal.

6. The method of claim 5, wherein the reply request signal has a first value for requesting a reply from a receiver of the reply request signal and a second value for not requesting a reply from a receiver of the reply request signal, and
when the transmitting device provides the reply request signal having the second value, the receiving device and the transmitting device perform no handshaking.

7. The method of claim 5, wherein the parcel signal includes data and a command transmitted from the transmitting device to the receiving device through the request channel.

8. The method of claim 7, wherein the parcel signal further includes an address of the data.

9. The method of claim 5, wherein the parcel signal further includes a reception parcel signal, and the reception parcel signal includes data transmitted from the receiving device to the transmitting device through the reply channel.

10. The method of claim 5, wherein:
the providing of the parcel signal is performed n times;
the providing of the reply request signal indicating that a reply is not required is sequentially performed n-1 times;
the transmitting device provides the reply request signal indicating that a reply is required in the providing of an nth parcel signal; and
acknowledgement between the transmitting device and the receiving device on the providing of a last parcel signal is performed, and
wherein n is a natural number greater than or equal to 2, and k is a natural number less than n.

11. The method of claim 5, wherein:
the providing of the parcel signal is performed n times; and
the providing of the reply request signals indicating that a reply is not required is performed a plurality of times,
wherein the transmitting device performs the providing of the reply request signal indicating that a reply is required every k times out of the n times such that an an acknowledgement process is performed between the transmitting device and the receiving device, and
wherein n is a natural number greater than or equal to 2, and k is a natural number less than n.

12. A communication method by which a transmitting device and a receiving device communicate through a request channel and a reply channel, the communication method comprising:
providing, by the transmitting device, a first parcel signal including a command regarding first data through a request channel;
providing, by the transmitting device, a second parcel signal including a command regarding second data through the request channel;
outputting, by the transmitting device, a ready signal;
outputting the first data without state transition of the receiving device and the transmitting device, and
outputting, by the receiving device, the second data.

13. The method of claim 12, wherein:
the first parcel signal includes a read command for the first data and an address of the first data; and
the second parcel signal includes a read command for the second data and an address of the second data.

14. The method of claim 12, wherein the ready signal has two bits, and each bit corresponds to whether one of the first data and the second data is received.

15. The method of claim 12, wherein the providing of the first parcel signal and the providing of the second parcel signal further include performing handshaking such that the transmitting device outputs a valid signal indicating that the request channel is valid and the receiving device outputs a ready signal to the request channel.
